# EUROPEAN PATENT APPLICATION

(11) **EP 2 068 486 A1**
(43) Date of publication of application: **10.06.2009**
(21) Application number: 07800763.0
(22) Date of filing: 22.08.2007
(51) Int. Cl.: H04L 1/18

(54) **A METHOD FOR CONTROLING DATA RETRANSMISSION IN WIRELESS NETWORK AT THE LAST RETRANSMISSION TIME**

(30) Priority: 23.08.2006 CN 200610030362
(71) Applicant: Alcatel Lucent, 75008 Paris (FR)
(72) Inventor: YANG, Tao, Shanghai 201206 (CN); YOU, Mingli, Shanghai 201206 (CN)
(74) Representative: Kohler Schmid Möbus
(86) International application number: PCT/CN2007/002543
(87) International publication number: WO 2008/025251

(57) **Abstract**

To resolve the signaling error problem possibly happening at the final retransmission in the wireless network using ARQ, a method, in the communication equipment as a receiver in the wireless network using ARQ, for controlling data retransmission at the final retransmission, a corresponding method for auxiliarily controlling data retransmission, and a controlling device and a corresponding auxiliary controlling device thereof are disclosed. Furthermore, a communication equipment in the wireless network using ARQ is also disclosed, which can be a network equipment or a user equipment. With the proposed method, corresponding device and communication equipment, the wireless network can effectively avoid the signaling error problem at the final retransmission, effectively utilize the wireless resource, reduce the requirement for the HARQ buffer, increase the automatic retransmission speed and avoid the unrecoverable problem of discarding of the data packet.

## Description

### Field of the Invention

The invention relates to telecommunication system, and particularly to method and corresponding device for data retransmission at the final retransmission in the wireless network using automatic repeat request (ARQ) mechanism.

### Background of the Invention

In the wireless network using ARQ mechanism, error of signaling failure will occur at the final retransmission or under other conditions. For instance, in bad telecommunication environment, it is likely that, the data packet received by the receiver is correct at the final retransmission and the receiver feedbacks an ACK to the transmitter, but the feedback received by the transmitter is NACK due to the bad telecommunication environment. At this moment, according to ARQ mechanism, the transmitter could not delete the data packet from the buffer and has to retransmit the data packet automatically some time later, which at least leads to the waste of resource.

Furthermore, at the final retransmission using ARQ, it will probably lead to more serious problems, such as unrecoverable discarding of the transmitted data packet and so on. Hereinafter, with reference to long term evolution (LTE) system, the problem possibly incurred by the final retransmission of ARQ and the reason thereof will be further analyzed.

3GPP (the 3rd Generation Partnership Project) proposed a conceive of LTE system on the Evolved UTRAN conference held on November 2004 in Toronto, Canada, and established the LTE research project on December 2004. The basic target of LTE system is to compete with other technologies in the field of Mobile Broadband Wireless Access (MBWA), such as reducing per-bit cost, enhancing the supporting capacity for future services, flexible deployment on the existing and new frequency band, simple structure, open interface and taking into account the appropriate power saving of the terminal. LTE system has introduced the features of IP network on the basis of traditional mobile telecommunication network, so as to well support IP multi-media service. It could support VoIP, video telephone, VOD (Video on Demand), IM and MBMS better, meanwhile, consider providing sound development basis for the new emerging service in the future, and it improves the development of wireless broadband access technology and industry.

In LTE system, the employed ARQ operation is largely based on the indication from the hybrid automatic repeat request (HARQ). But the error of signaling failure is inevitably incurred at the final retransmission and under other conditions. Reference 25.813 E-UTRA: radio interface protocol aspects (refers to as reference 1 hereinafter) gives the basic rules about the ARQ operation in LTE system:
- If the HARQ transmitter detects a failed delivery due to maximum data transmission e.g. maximum retransmission limit, it is for further study if the relevant retransmitting ARQ entities are notified;
- If the HARQ receiver is able to detect a NACK→ACK error, it is for further study if the relevant transmitting ARQ entities are notified via explicit signaling.

The first rule means that the HARQ transmitter should be responsible for detecting the successful or failed delivery of a data packet when reaching the maximum retransmission limit. The reason is that only the transmitter knows the maximum retransmission limit. Based on this rule, the HARQ transmitter notifies the ARQ transmitter to retransmit or discard the related radio link control (RLC) data packet, in other words, the data packet at the final retransmission. Then the ARQ level retransmission occurs earlier than the sending of status report after decoding to the receiver by the transmitter. This solution seems reasonable, but it in fact leads to other drawbacks, such as the waste of wireless telecommunication resource as mentioned above, and RLC retransmission delay because the retransmission will happen some time later. More seriously, this solution may result in the unrecoverable discarding of RLC data packet because, in some cases, the transmitter may consider that the data packet received by the receiver is correct, such that it deletes the data packet mistakenly, whereas the data packet received by the receiver is actually incorrect.

The reference 1 indicates the solution that the HARQ transmitter should be used to indicate and solve the error happened at the final retransmission. But the solution also leads to many other drawbacks as follows:

### 1) Drawback on the ACK→NACK scenario

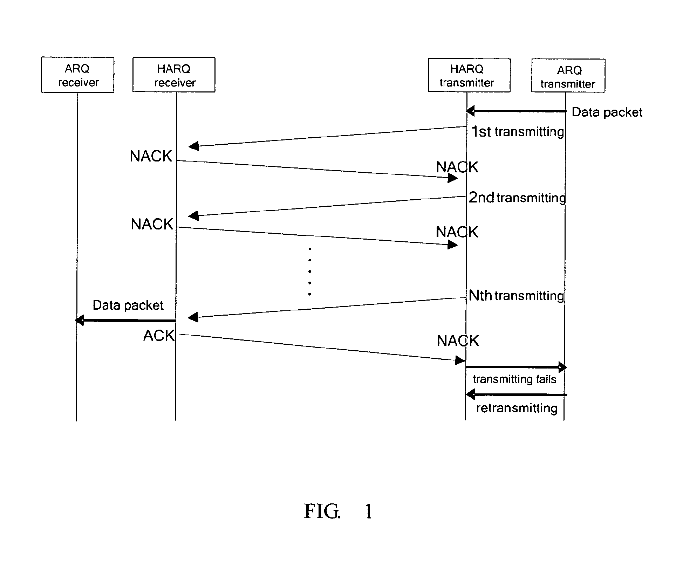

According to current rules, after the final retransmission finished, the HARQ transmitter flushes the transmitter buffer. But when ACK→NACK happened at the final retransmission, that is to say, the data packet received by the receiver at the final retransmission is correct and therefore the receiver feedbacks an ACK to the transmitter, but the feedback received by the transmitter is NACK so that the transmitter may misunderstand that the data packet received by the receiver is incorrect, the HARQ transmitter indicates the ARQ transmitter to retransmit the related RLC data packet, which leads to the waste of wireless telecommunication resource. The detailed procedure of this scenario is shown in fig.1.

### 2) Drawback on the NACK→ACK scenario

When NACK→ACK happened at the final retransmission, that is to say, the data packet received by the receiver at the last transmission is incorrect and the receiver feedbacks a NACK to the transmitter, but the transmitter receives an ACK mistakenly and may misunderstand that the data packet received by the receiver is correct, things happening on the receiver and the transmitter are as follows respectively:
- For the receiver, since the data packet received by the receiver is incorrect, the corresponding buffer in the HARQ receiver cannot be flushed. Thus, in some extreme conditions, even though the data packet has been received through other means, the corresponding buffer has not been flushed all the while, which leads to large requirement for HARQ buffer.
- For the transmitter, the HARQ transmitter starts a timer and indicates the ARQ transmitter to transmit the next data packet to be transmitted.
   ■ During the timing, in case that the receiver indicates the signaling error, namely the occurrence of NACK→ACK, in time, and the HARQ transmitter asks for the ARQ transmitter to retransmit said data packet, at this moment, the data packet has not been discarded, and thus it could be retransmitted. However, it could be understood that the ARQ retransmission is very late, which leads to data packet transmission delay.
   ■ On the other hand, during the above timing, in case that the receiver does not feedback any information about signaling error, the HARQ transmitter will trigger the ARQ transmitter to discard the related RLC data packet, and indicate the ARQ transmitter to transmit the next data packet to be transmitted. But in fact, the RLC data packet hasn't been received by the receiver correctly. It could be understood that in this case the retransmission cannot happen, that is to say, an unrecoverable discarding of RLC data packet error happens.

Through above analysis, it could be understood that, when using ARQ mechanism, the signaling error will happen at least at the final retransmission. Therefore, it is necessary to resolve this problem so as to guarantee the accuracy and high speed of data transmission.

### Summary of the invention

To solve the above signaling error problem happening at the final retransmission, one object of the invention is to provide a data retransmission controlling scheme for determining whether or not to ask for the transmitter to retransmit, by judging whether or not the final retransmission is correct, in the wireless network using ARQ.

According to the first aspect of the invention, there is provided a method, in a communication equipment as a receiver in wireless telecommunication network using ARQ, for controlling data retransmission at the final retransmission, comprising the steps of: receiving a retransmitted data packet from another communication equipment as a transmitter; judging whether or not said retransmitted data packet is at the final retransmission; if said retransmitted data packet is at the final retransmission, sending indication information to said another communication equipment as a transmitter according to the decoding result of said retransmitted data packet.

According to the second aspect of the invention, there is provided a controlling device, in a communication equipment as a receiver in wireless telecommunication network using ARQ, for controlling data retransmission at the final retransmission, comprising: a receiving means for receiving a retransmitted data packet sent from another communication equipment as a transmitter; a first judging means for judging whether or not said retransmitted data packet is at the final retransmission; a retransmission controlling means for if said retransmitted data packet is at the final retransmission, sending indication information to said another communication equipment as a transmitter according to the decoding result of said retransmitted data packet.

According to the third aspect of the invention, there is provided a method, in a communication equipment as a transmitter in wireless telecommunication network using ARQ, for auxiliarily controlling data retransmission at the final retransmission, comprising the steps of: receiving indication information, which is used for indicating whether a retransmitted data packet at the final retransmission is correct or not, from another communication equipment as a receiver; according to said indication information, retransmitting said retransmitted data packet or sending the next data packet to be transmitted.

According to the fourth aspect of the invention, there is provided an auxiliary controlling means, in a communication equipment as a transmitter in wireless telecommunication network using ARQ, for controlling data retransmission at the final retransmission, comprising: an auxiliary receiving means for receiving indication information from another communication equipment as a receiver; a retransmission controlling means for according to said indication information, retransmitting said retransmitted data packet or sending the next data packet to be transmitted.

According to the fifth aspect of the invention, there is provided a communication equipment in wireless network using ARQ, comprising said controlling means according to the second aspect of the invention and/or the auxiliary controlling means according to the fourth aspect of the invention.

Compared with the prior art, the present invention has the advantages as follows:
(1) Since the decoding result of the transmitted data packet is generated by the receiver, it totally avoids the signaling error at the final retransmission hereinabove.
(2) The receiver could flush the buffer of the HARQ receiver very quickly, which decreases the requirement for HARQ buffer.
(3) The receiver sends indication information to ask for the transmitter to retransmit the data packet and the retransmission time is earlier than that of the current solution, which makes the retransmission speed faster.
(4) The receiver sends indication information to indicate the transmitter to discard the data packet and start the transmission of the next data packet, which avoids the unrecoverable data packet discarding.
(5) The retransmission time field is redefined to detect the occurrence of the final retransmission, without generating new L1 signaling.

### Brief Description of the Drawings

Other features, objects and advantages of the present invention will become more apparent by reading the following detailed description of the non-limiting embodiment together with the accompany drawings.
Fig. 1 is a schematic principle view of signaling error happening at the final retransmission in the existing solution;
Fig. 2 is another schematic principle view of signaling error happening at the final retransmission in the existing solution;
Fig. 3 is a schematic principle view of the technical solution for controlling data retransmission according to an embodiment of the present invention;
Fig. 4 is a schematic view of controlling data retransmission according to the second embodiment of the present invention;
Fig. 5 is another schematic view of controlling data retransmission according to the second embodiment of the present invention;
Fig. 6 shows a sending flow chart of the transmitter according to the fifth embodiment of the present invention;
Fig. 7 shows an operating flow chart of the receiver according to the fifth embodiment of the present invention;
Fig. 8 is a schematic view of the operation of a communication equipment provided by the present invention;
Fig. 9 is a schematic components view the communication equipment according to the sixth and seventh embodiments of the present invention;

### Embodiments of the Present Invention

Detailed description of the invention is given as below with reference to the appended drawings.

Fig.1 shows the occurrence progress of the error of signal transmission at the final retransmission in LTE in the existing solution. Referring to fig.1, it shows a communication equipment as a receiver (could be a base station or a user equipment) on the left. It comprises an ARQ receiver and a HARQ receiver which are used together for receiving data packets from a transmitter. Symmetrically, it shows a communication equipment as a transmitter (could also be a base station or a user equipment) on the right. The communication equipment comprises an ARQ transmitter and a HARQ transmitter which are used together for transmitting data packets. During one transmission progress, firstly, the ARQ transmitter sends a data packet to the HARQ transmitter, and then the HARQ transmitter sends the data packet to the HARQ receiver. If the HARQ receiver receives the data packet correctly, it feedbacks ACK response information to the HARQ transmitter, and the transmission ends. If the HARQ receiver doesn't receive the data packet correctly, it feedbacks NACK response information to the HARQ transmitter. After receiving the NACK response information from the HARQ receiver, the HARQ transmitter sends the data packet to the HARQ receiver once again, until the HARQ receiver receives the data packet correctly or the retransmission time reaches maximum retransmission time, that is to say, the HARQ transmitter still receives NACK response information from the HARQ receiver after the final retransmission. If the HARQ transmitter still receives the NACK response information from the HARQ receiver after the final transmission, the HARQ transmitter sends indication information to the ARQ transmitter to notify it to retransmit the data packet. At this moment, it goes into the progress of next retransmission, that is to say, the ARQ transmitter starts to transmit the data packet once again, which is similar to above-mentioned procedure.

Referring to fig.1, the aforesaid existing solution of the prior art could handle the retransmission in the normal condition; however, it will also bring unnecessary retransmission in the condition shown in fig.1. The HARQ receiver receives the data packet correctly after the HARQ transmitter retransmits the data packet at the final retransmission, and therefore the retransmission should not be initiated according to the designing principle of the aforesaid existing solution; however, the feedback received by the HARQ transmitter is NACK, due to the error happening in the procedure of the feedback of the ACK response information from the HARQ receiver to the HARQ transmitter. Therefore, the HARQ transmitter misunderstands that the HARQ receiver doesn't receive the data packet correctly, and hence the HARQ transmitter indicates the ARQ transmitter for retransmission.

Therefore, it could be understood that unnecessary retransmission happens in the condition shown in fig.1, which leads to the waste of wireless telecommunication resource.

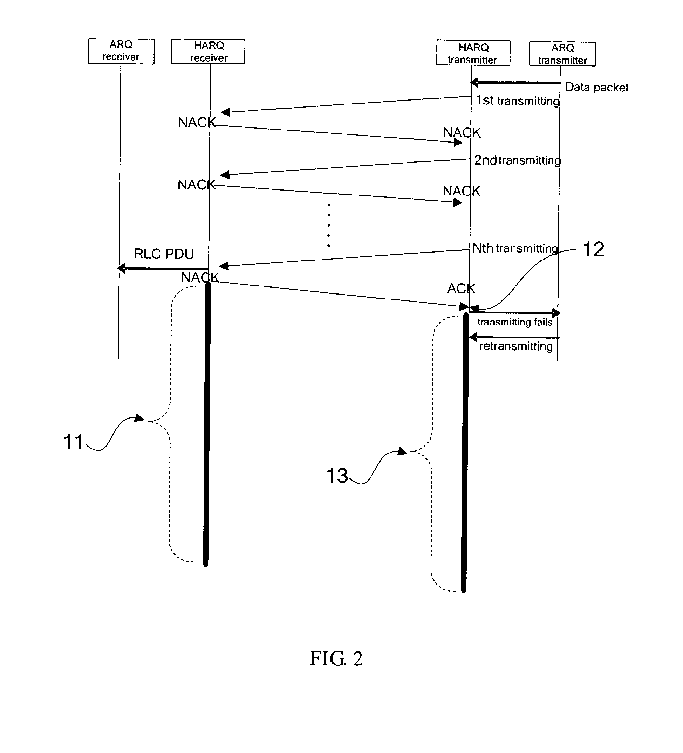

Fig.2 shows another case of the occurrence of the error of the signal transmission happening at the final retransmission in LTE in the existing solution. Different from fig.1, at the final retransmission, the HARQ receiver doesn't receives the data packet correctly, and it feedbacks NACK response information to the HARQ transmitter. Due to the same reason mentioned in fig.1, the HARQ transmitter finally receives ACK response information and hence the HARQ transmitter misunderstands that the HARQ receiver had received the data packet correctly. At this moment, at the time marked by 12 in fig.2, the HARQ transmitter starts a timer which is used to indicate that, if there is no information about signaling error during the timed period, the HARQ transmitter will indicate the ARQ transmitter to delete the data packet and start to transmit the next data packet; and meanwhile, the HARQ transmitter will delete the relevant information of the data packet from the buffer. As to the receiver, because it doesn't receive the data packet correctly, the buffer which is used for receiving the data packet could not be flushed. At this moment, two circumstances exist:
Firstly, during the above timed period, if the receiver feedbacks the information about the occurrence of NACK→ACK to the HARQ transmitter, the ARQ transmitter will start retransmission, as shown in fig.2. In this case, it will only lead to retransmission delay shown by mark 11 in fig.2, but not lead to discarding of data packet.
Secondly, during the above timed period, if the receiver does not feedback any information about signaling error, the HARQ transmitter will trigger the ARQ transmitter to discard the related RLC data packet, which leads to the unrecoverable error.

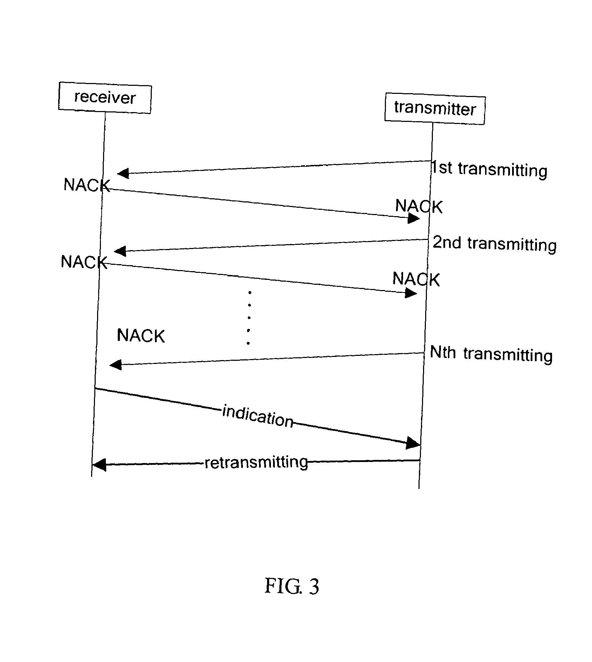

Fig. 3 is a schematic view of the proposed solution according to the present invention. As shown in fig.3, when using ARQ for retransmission, the procedure of retransmission before the final retransmission is similar to that of the existing solution, but after the final retransmission, the receiver will send indication information to the transmitter no matter whether it received the data packet correctly or not.

In the first embodiment of the present invention, before sending the indication information to the transmitter, the receiver decodes the retransmitted data packet which was received at the final retransmission, so as to obtain the decoding result. If the decoding result shows that the retransmitted data packet is correct, the receiver sends retransmission-correct indication information to the transmitter for indicating the retransmitted data packet received by the receiver is correct, otherwise, the receiver sends retransmission-incorrect indication information to the transmitter for indicating the retransmitted data packet received by the receiver is incorrect.

Correspondingly, in the first embodiment of the present invention, after receiving the above indication information, the transmitter judges the indication information: if it is retransmission-correct indication information, the transmitter does not start retransmission, but starts to transmit the next data packet to be transmitted; on the contrary, if it is retransmission-incorrect indication information, the transmitter starts retransmission, as shown in fig.3.

Due to the utilization of the mechanism shown in fig.3, before or after sending the indication information to the transmitter, the receiver could delete the relevant information of the retransmitted data packet from the buffer of the receiver, so as to flush this block of buffer. Certainly, with reference to the existing solution, the person skilled in the art could understand that if the retransmitted data packet received by the receiver is correct, before flushing the buffer, the retransmitted data packet has been processed appropriately, so as to continue being processed.

In the first embodiment of the present invention, before sending the indication information, the receiver has sent NACK or ACK response information to the transmitter. The person skilled in the art could understand that, in such an embodiment, sending the NACK or ACK response information to the transmitter is to make the operation of the transmitter and the receiver comply with the existing norms, which will not limit the present invention. As a matter of fact, after receiving NACK or ACK response information, the transmitter does not do any procession according to the content of the response information.

In the first embodiment of the present invention, after the final retransmission, no matter the transmitter receives NACK or ACK response information from the receiver, the transmitter starts to transmit the next data packet to be transmitted. However, preferably, if the above indication information is for correct retransmission, the response information is ACK, and on the contrary, if the indication information is for incorrect retransmission, the response information is NACK.

The person skilled in the art could understand that, in the present invention, the receiver determines whether the final retransmission happens or not. It could be seen that in the existing solution, only the transmitter knows whether the final retransmission happens or not. Therefore, in the present invention, the receiver must be enabled to determine whether the final retransmission happens or not.

In the first embodiment of the present invention, the receiver determines whether the final retransmission happens or not by the retransmission times information, which is used for indicating the retransmission time. More specifically, in the first embodiment of the present invention, the retransmission times information is contained in the transmitted data packet, and therefore, the receiver could know the retransmission times information when decoding the data packet.

The person skilled in the art could understand that, in other embodiments of the present invention, the receiver could obtain the retransmission times information for indicating the retransmission time by other means. For instance, while sending a data packet, the transmitter also sends a broadcast message, through which the receiver could obtain the retransmission times information.

In the first embodiment of the present invention, the retransmission sequence number (RSN) field in a data packet is used to represent the retransmission time, and before sending a data packet at the first time, the transmitter sets the RSN as maximum retransmission time, and then decreases the RSN by 1 each time the data packet is retransmitted. For instance, if the maximum retransmission time is 5, the initial value of the RSN is 5. After the data packet is transmitted twice, the value of the RSN will be 3. The person skilled in the art could understand that, when the value of the RSN is 0, the receiver determines that the final retransmission happens, that is to say, the data packet retransmitted at this time is at the final retransmission.

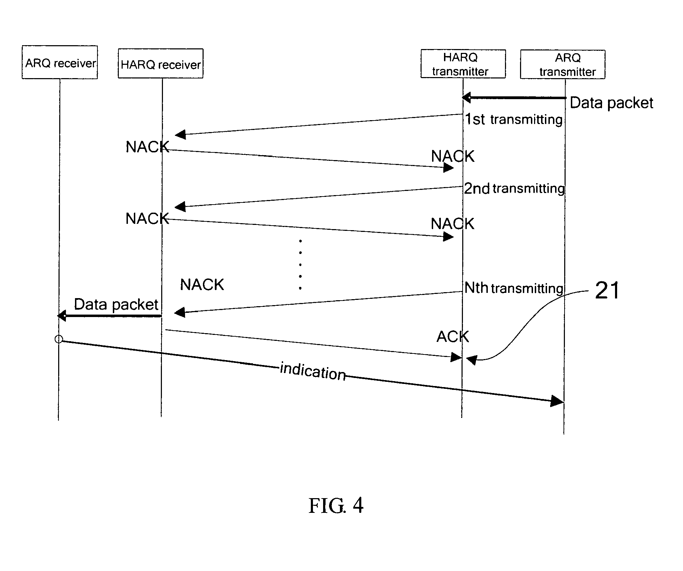

Referring to fig.4, it shows a schematic view of the second embodiment of the present invention for controlling data retransmission. The second embodiment is applied to the ARQ mechanism in LTE. Similar to the existing solution, the transmitter comprises an ARQ transmitter and a HARQ transmitter, and the receiver comprises an ARQ receiver and a HARQ receiver. After the final retransmission, the HARQ receiver decodes the received data packet, and judges the decoding result. If the decoding result is NACK, the HARQ receiver sends ACK to the HARQ transmitter, and sends indication information to the ARQ transmitter via the ARQ receiver. According the present invention, it could be understood that since the decoding result is NACK, the above indication information is for incorrect retransmission. After receiving the indication information, the ARQ transmitter starts to retransmit the data packet.

Referring to fig.4 again, in the second embodiment of the present invention, after sending the indication information, the HARQ receiver deletes the relevant information of the data packet from its buffer so as to flush the buffer.

Referring to fig.4 again, after receiving the ACK response information from the HARQ receiver, the HARQ transmitter indicates the ARQ transmitter to directly transmit the next data packet to be transmitted, which equally accelerates the transmission speed of the next data packet to be transmitted. However, the person skilled in the art could understand that, in the third embodiment which is similar to the second embodiment, after receiving ACK from the HARQ receiver, the HARQ transmitter does not do any procession, that is to say, the HARQ transmitter will not start to transmit the next data packet to be transmitted until the present data packet is retransmitted successfully.

Referring to fig.4, in the second embodiment of the present invention, at the time marked by 21, the HARQ transmitter does not start a timer corresponding to the retransmitted data packet.

The person skilled in the art could understand that the ARQ transmitter, the HARQ transmitter, the HARQ receiver and the ARQ receiver above are only general names of the means used to accomplish the ARQ mechanism, and they could be realized by using specific means in different embodiments.

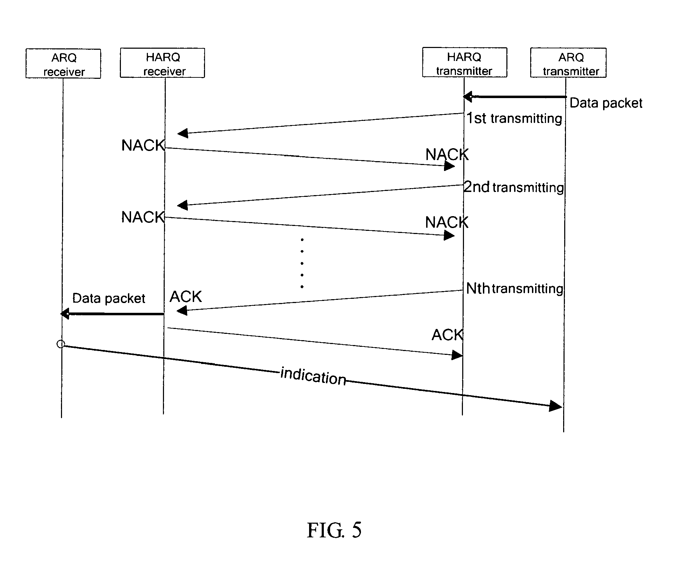

Referring to fig.5, it shows another schematic view of the second embodiment of the present invention for controlling data retransmission. Different from fig.4, after the final retransmission, the HARQ receiver decodes the data packet received and judges the decoding result. In this embodiment, the decoding result is ACK, and the HARQ receiver sends ACK response information to the HARQ transmitter and sends indication information to the ARQ transmitter via the ARQ receiver. Likewise, according to the present invention, it could be understood that since the decoding result is ACK, the indication information is for correct retransmission. After receiving the indication information, the ARQ transmitter discards the data packet and starts to transmit the next data packet to be transmitted.

Referring to fig.5 again, the person skilled in the art could understand that after the HARQ receiver determines the decoding result is ACK, in the fourth embodiment which is similar to the second embodiment, the HARQ receiver could also send NACK response information to the HARQ transmitter. It could be understood that after receiving the NACK response information from the HARQ receiver, the HARQ transmitter could also indicate the ARQ transmitter to directly transmit the next data packet to be transmitted.

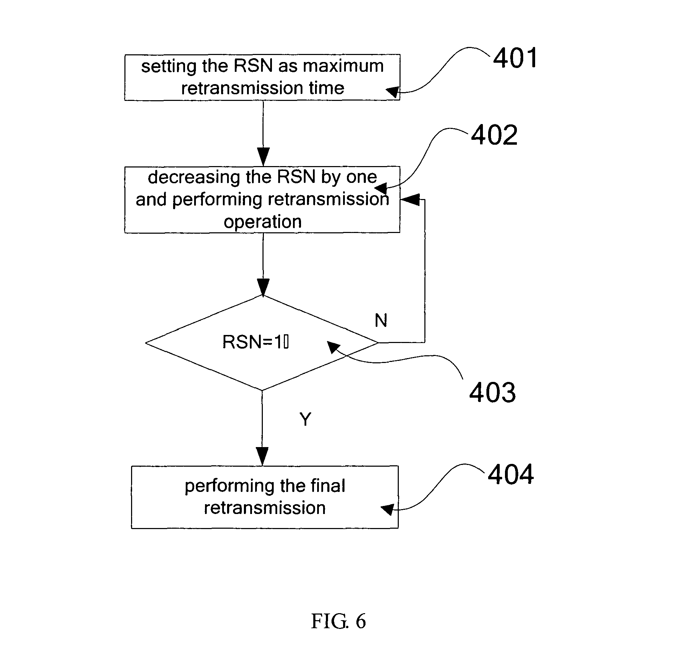

Referring to fig.6, it shows a sending flow chart of the transmitter in the fifth embodiment of the present invention. Referring to fig.6, in this embodiment, before sending a data packet at the first time, in step 401, the transmitter sets the RSN as maximum retransmission time. Then, in step 402, the transmitter decreases RSN by 1 and performs the transmission operation (the first transmission) or the retransmission operation (the transmission after the first transmission). In step 403, the transmitter judges whether or not the value of the RSN is 0. If the value is 0, the transmitter performs step 402 once again, and otherwise, in step 404, the transmitter performs the final retransmission.

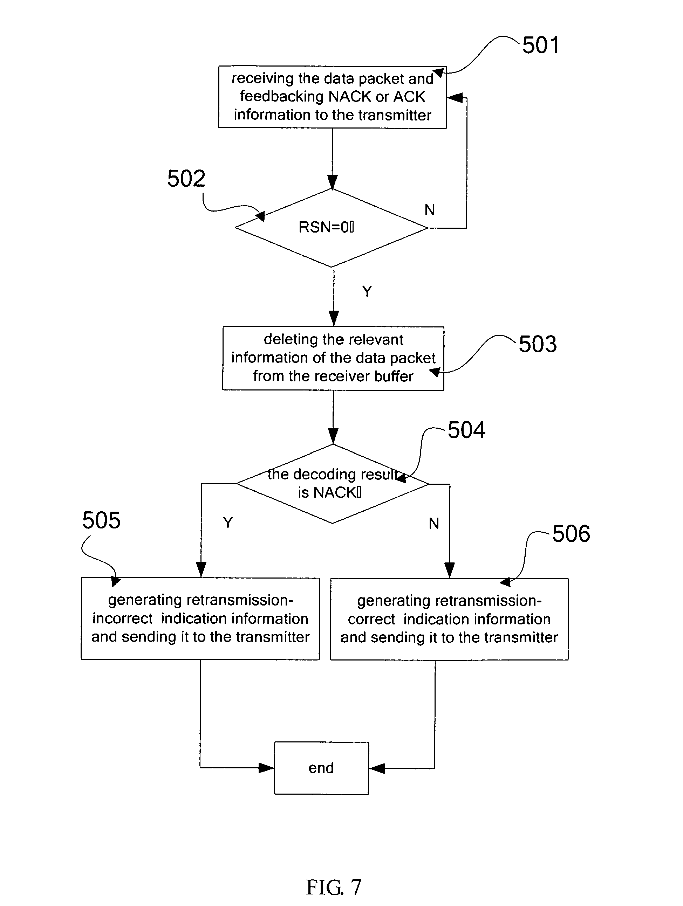

Referring to fig.7, it shows an operational flow chart of the receiver in the fifth embodiment of the present invention. In this embodiment, the receiver receives and decodes a data packet, and judges whether the data packet is correct according to the decoding result. In step 501, if the data packet is correct, the receiver feedbacks ACK response information to the transmitter, and if the data packet is incorrect, the receiver feedbacks NACK response information to the transmitter. Then in step 502, the receiver judges whether or not the value of the RSN is 0. If the value does not equal to 0, the receiver performs step 501 once again. If the value of the RSN is 0, the receiver performs step 503. In step 503, firstly, the receiver deletes the relevant information of the retransmitted data packet at the final retransmission from the buffer. Then, in step 504, the receiver judges whether the decoding result of the data packet is NACK. If the decoding result is NACK, in step 505, the receiver generates retransmission-incorrect indication information, and sends it to the transmitter. The person skilled in the art could understand that after receiving the retransmission-incorrect indication information, the transmitter starts retransmission. If the decoding result is ACK, in step 506, the receiver generates retransmission-correct indication information and sends it to the transmitter. The person skilled in the art could understand that after receiving retransmission-correct indication information, the transmitter starts to transmit the next data packet.

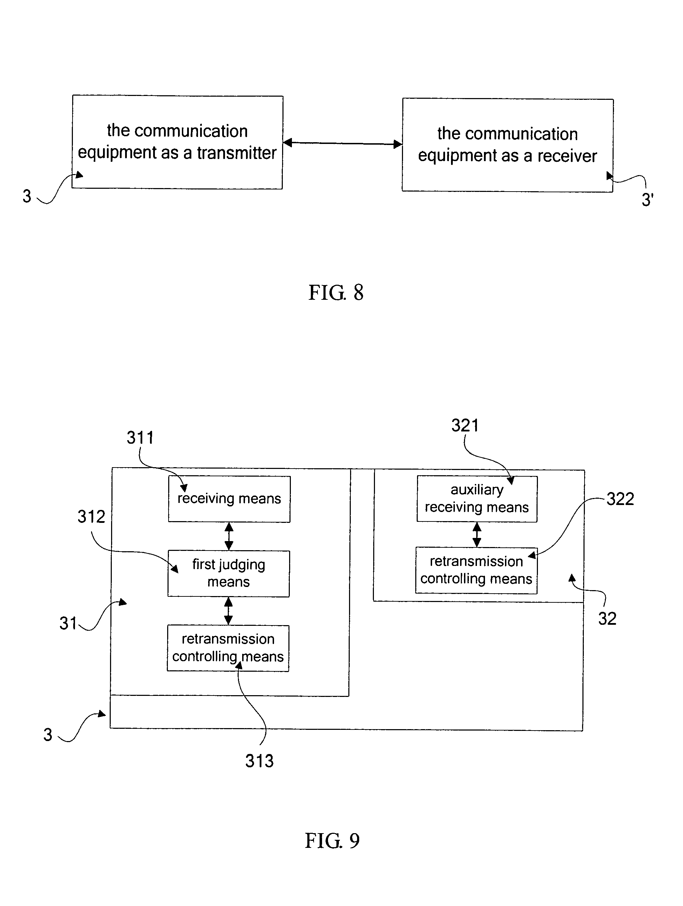

Referring to fig.8, it shows the relationship between the communication equipment 3 as a transmitter and the communication equipment 3' as a receiver, in one embodiment of the present invention. Wherein, the communication equipment 3 as a transmitter works in such a way as the content of the present invention and the embodiments described in fig.3 to fig.7. So does the communication equipment 3' as a receiver. It could be understood that, in this embodiment, in order to realize the object of the present invention, the function of the communication equipment 3 as a transmitter and the communication equipment 3' as a receiver should be identical, and they only play the roles of a transmitter and a receiver in the practical application.

As for the specific components of the communication equipment 3 as a transmitter and the communication equipment 3' as a receiver, please refer to fig. 9. Since the components of the communication equipment 3 as a transmitter and the communication equipment 3' as a receiver to realize the object of the present invention is identical, only the components of the communication equipment 3 as a transmitter is described.

Referring to fig.9, it shows the sixth embodiments of the present invention, which is the device corresponding to the methods of the present invention, that is, a controlling device 31, in a communication equipment as a receiver in wireless telecommunication network using ARQ for retransmission, for controlling data retransmission at the final retransmission. The controlling device 31 comprises a receiving means 311 for receiving a retransmitted data packet from another communication equipment as a transmitter; a first judging means 312 for judging whether or not said retransmitted data packet is at the final retransmission; and a retransmission controlling means 313 for if said retransmitted data packet is at the final retransmission, sending indication information to said another communication equipment as a transmitter according to the decoding result of said retransmitted data packet. Wherein, the retransmission controlling means 313 further comprises a decoding means for decoding said retransmitted data packet so as to obtain the decoding result; a second judging means for according to said decoding result, judging whether or not said retransmitted data packet is correct; and a retransmission indicating means for if said retransmitted data packet is correct, sending a retransmission-correct indication information to said transmitter for indicating said retransmitted data packet is correct; and if said retransmitted data packet is incorrect, sending a retransmission-incorrect indication information to said transmitter for indicating said retransmitted data packet is incorrect.

The person skilled in the art could understand that the first judging means 312 is further used for judging whether or not said retransmitted data packet is at the final retransmission, according to the retransmission times information, in said retransmitted data packet, for indicating the retransmission time. For instance, the first judging means 312 could judge whether or not the retransmitted data packet is at the final retransmission by the procedure shown in fig.7.

In the sixth embodiment of the present invention, the communication equipment further comprises a buffer deleting means for if said retransmitted data packet is at the final retransmission, deleting the relevant information of said retransmitted data packet from the buffer.

The person skilled in the art could understand that, in the sixth embodiment of the present invention, said retransmission controlling means is further used for sending said indication information to an ARQ means of said transmitter via an ARQ means of said receiver.

Referring to fig.9, it also shows the seventh embodiment of the present invention. Based on the sixth embodiment, the seventh embodiment provides an auxiliary controlling device 32, in a communication equipment as a transmitter in wireless telecommunication network using ARQ, for controlling data retransmission at the final retransmission according to the present invention. The auxiliary controlling device 32 comprises an auxiliary receiving means 321 for receiving indication information from another communication equipment as a receiver; and a retransmission controlling means 322 for according to said indication information, retransmitting a retransmitted data packet which is at the final retransmission or sending the next data packet to be transmitted. Wherein, said retransmission controlling means further comprises a judging means for judging whether said indication information is the retransmission-incorrect indication information indicating said retransmitted data packet is incorrect or retransmission-correct indication information indicating said retransmitted data packet is correct; and a sending means for if said indication information is for correct retransmission , retransmitting said retransmitted data packet, and if said indication information is for correct retransmission, sending the next data packet to be transmitted.

The person skilled in the art could understand that, in other embodiments, the retransmission controlling means 313 and the retransmission controlling means 322 shown in fig.9 could be realized by one single means, which will not be unnecessarily described in details.

The person skilled in the art could understand that, in the seventh embodiment of the present invention, said auxiliary controlling device 32 further comprises a buffer deleting means for if said indication information is for correct retransmission, deleting the relevant information of said retransmitted data packet from the buffer.

In the eighth embodiment of the present invention, there is provided a communication equipment in wireless network using ARQ, comprising said controlling device according to the sixth embodiment and said auxiliary controlling device according to the sixth embodiment.

The person skilled in the art could understand that, the communication equipment in the eighth embodiment could be a network equipment or a user equipment.

Although the embodiments of the present invention have been described above with reference to the drawings, it is to be understood that, the present invention is not limited to the embodiments, and various modifications and amendments can be made without departing from the scope of the attached claims by those skilled in the art.

## Claims

1. A method, in a communication equipment as a receiver in wireless telecommunication network using automatic repeat request, for controlling data retransmission at the final retransmission, comprising the steps of:
a. receiving a retransmitted data packet from another communication equipment as a transmitter;
b. judging whether or not said retransmitted data packet is at the final retransmission;
c. if said retransmitted data packet is at the final retransmission, sending indication information to said another communication equipment as a transmitter according to a decoded result of said retransmitted data packet.

2. The method according to claim 1, wherein said step c further comprises the steps of:
- decoding said retransmitted data packet so as to obtain the decoding result;
- judging whether or not said retransmitted data packet is correct according to said decoding result;
- if said retransmitted data packet is correct, sending a retransmission-correct indication information to said transmitter;
- if said retransmitted data packet is incorrect, sending retransmission-incorrect indication information to said transmitter.

3. The method according to claim 1 or claim 2, further comprising the step of:
- if said retransmitted data packet is at the final retransmission, deleting the relevant information of said retransmitted data packet from the buffer.

4. The method according to any one of claims 1 to 3, wherein said step b comprises the step of:
- judging whether or not said retransmitted data packet is at the final retransmission, according to the retransmission times information in said retransmitted data packet for indicating the retransmission time.

5. The method according to any one of claims 1 to 4, wherein said step c further comprises the step of:
- sending said indication information to an ARQ means of said transmitter via an ARQ means of said receiver.

6. A controlling device, in a communication equipment as a receiver in wireless telecommunication network using automatic repeat request, for controlling data retransmission at the final retransmission, comprising:
a receiving means for receiving a retransmitted data packet sent from another communication equipment as a transmitter;
a first judging means for judging whether or not said retransmitted data packet is at the final retransmission;
a retransmission controlling means for if said retransmitted data packet is at the final retransmission, sending indication information to said another communication equipment as a transmitter according to a decoding result of said retransmitted data packet.

7. The controlling device according to claim 6, wherein said retransmission controlling means comprises:
a decoding means for decoding said retransmitted data packet so as to obtain the decoding result;
a second judging means for according to said decoding result, judging whether or not said retransmitted data packet is correct;
a retransmission indicating means for if said final retransmission is correct, sending retransmission-correct indication information to said transmitter, and if said final retransmission is incorrect, sending retransmission-incorrect indication information to said transmitter.

8. The controlling device according to claim 6 or claim 7, further comprising:
a buffer deleting means for if said retransmitted data packet is at the final retransmission, deleting the relevant information of said retransmitted data packet from the buffer.

9. The controlling device according to any one of claims 6 to 8, wherein said first judging means is further used for judging whether or not said retransmitted data packet is at the final retransmission, according to the retransmission times information in said retransmitted data packet for indicating the retransmission time.

10. The controlling device according to any one of claims 6 to 9, wherein said retransmission controlling means is further used for sending said indication information to an automatic repeat request means of said transmitter via an ARQ means of said receiver.

11. A method, in a communication equipment as a transmitter in wireless telecommunication network using ARQ, for auxiliarily controlling data retransmission at the final retransmission, comprising the steps of:
i. receiving indication information, which is used for indicating whether a retransmitted data packet at the final retransmission is correct or not, from another communication equipment as a receiver;
ii. according to said indication information, retransmitting said retransmitted data packet or sending the next data packet to be transmitted.

12. The method according to claim 11, wherein said step ii comprises the steps of:
- judging whether said indication information is retransmission-incorrect indication information for indicating said retransmitted data packet is incorrect, or is retransmission-correct indication information for indicating said retransmitted data packet is correct;
- if said indication information is retransmission-incorrect indication information, retransmitting said retransmitted data packet;
- if said indication information is retransmission-correct indication information, sending the next data packet to be transmitted.

13. The method according to claim 11 or claim 12, further comprising the step of:
iii. deleting the relevant information of said retransmitted data packet from the buffer.

14. The method according to any one of claims 11 to 13, further comprising the step of:
- when ACK or NACK information is received from said receiver, sending said next data packet to be transmitted to said receiver.

15. The method according to any one of claims 11 to 14, further comprising the step of:
- when ACK or NACK information is received from said receiver, not starting a timer corresponding to said retransmitted data packet.

16. The method according to any of claims 11 to 15, further comprising the step of:
- when a data packet is transmitted at the first time, setting the retransmission times information in said data packet for indicating the retransmission time as maximum retransmission time and decreasing said retransmission times information by one each time said data packet is retransmitted.

17. An auxiliary controlling device, in a communication equipment as a transmitter in wireless telecommunication network using automatic repeat request, for controlling data retransmission at the final retransmission, comprising:
an auxiliary receiving means for receiving indication information from another communication equipment as a receiver;
a retransmission controlling means for according to said indication information, retransmitting a retransmitted data packet which is at the final retransmission or sending the next data packet to be transmitted.

18. The auxiliary controlling device according to claim 17, wherein said retransmission controlling means further comprises:
a judging means for judging whether said indication information is retransmission-incorrect indication information for indicating that said retransmitted data packet is incorrect or, is retransmission-correct indication information for indicating that said retransmitted data packet is correct;
a sending means for if said indication information is retransmission-incorrect indication information, retransmitting said retransmitted data packet, and if said indication information is retransmission-correct indication information, sending the next data packet to be transmitted.

19. The auxiliary controlling device according to claim 17 or claim 18, further comprising:
a buffer deleting means for if said indication information is retransmission-correct indication information, deleting the relevant information of said retransmitted data packet from the buffer.

20. A communication equipment in wireless network using automatic repeat request, comprising said controlling device according to any of claims 6 to 10 and/or said auxiliary controlling device according to any of claims 17 to 19.

21. A communication equipment according to claim 20, wherein said communication equipment is a network equipment or a user equipment.
